# EUROPEAN PATENT APPLICATION

(11) **EP 2 921 271 A2**
(43) Date of publication of application: **23.09.2015**
(21) Application number: 15159710.1
(22) Date of filing: 18.03.2015
(51) Int. Cl.: B28B 1/00, B28B 3/26, B28B 11/16

(54) **MANUFACTURING METHOD OF HONEYCOMB FORMED BODY AND MANUFACTURING METHOD OF HONEYCOMB STRUCTURE**

(30) Priority: 20.03.2014 JP 2014057746
(71) Applicant: NGK Insulators, Ltd., Nagoya-city, Aichi 467-8530 (JP)
(72) Inventor: Ueda, Shuji, Nagoya city, Aichi 467-8530 (JP); Nobiki, Kosuke, Nagoya city, Aichi 467-8530 (JP)
(74) Representative: Naylor, Matthew John

(57) **Abstract**

A manufacturing method of a honeycomb formed body includes a forming step of extruding a coupled forming raw material billet 19 from a honeycomb body forming die **41** to obtain a honeycomb-shaped formed product 20, the coupled forming raw material billet having a colorant 15 applied on at least one of coupling surfaces between each forming raw material billets to be coupled; a cutting step of cutting the formed product 20 to obtain a plurality of honeycomb formed bodies; and a separating step of separating the plurality of honeycomb formed bodies into a colorant-containing honeycomb formed bodies and a colorant non-containing honeycomb formed bodies.

## Description

The present application is an application based on JP2014-057746 filed with Japan Patent Office on March/20/2014, the entire contents of which are incorporated herein by reference.

### BACKGROUND OF THE INVENTION

### Field of the Invention

The present invention relates to a manufacturing method of a honeycomb formed body and a manufacturing method of a honeycomb structure. More specifically, the present invention relates to the manufacturing method of the honeycomb structure used, for example, as a filter or a catalyst carrier for purifying exhaust gas.

A honeycomb structure whose main constituent is ceramic has been widely used as a filter and a catalyst carrier for purifying exhaust gas. Manufacture of the honeycomb structure involves performing a step of extruding a forming raw material containing a ceramic raw material from a die (honeycomb body forming die) with slits cut into a grid pattern (forming step).

The above-described forming step employs a method of preparing a plurality of billets (forming raw material billets) of a forming raw material containing the ceramic raw material and consecutively extruding these plurality of forming raw material billets while sequentially coupling the forming raw material billets (see, for example, Patent Document 1).

[Patent Document 1] JP-A-2006-289953

### SUMMARY OF THE INVENTION

However, once the forming raw material billets are extruded, it is difficult to identify a joint portion of the forming raw material billets in the obtained honeycomb formed body, and the honeycomb formed body including the joint portion is likely to have a poor quality. Here, it is true that it is possible to address this problem by means of separating and eliminating a honeycomb formed body which is presumed to include the joint portion. However, in order to reliably eliminate the honeycomb formed body including the joint portion, it is unavoidable to eliminate unnecessarily honeycomb formed body that does not include the joint portion. Accordingly, it is difficult for the conventional technique to efficiently obtain honeycomb formed bodies with high qualities from a predetermined amount of forming raw material.

The present invention has been developed in view of the abovementioned problems, and an object thereof is to provide a technique for obtaining a large number of honeycomb formed bodies and honeycomb structures from a predetermined amount of forming raw material while suppressing occurrence of defective products.

The present invention is the following manufacturing method of the honeycomb formed body and the manufacturing method of the honeycomb structure.
[1] A manufacturing method of a honeycomb formed body, including a forming step of extruding a coupled forming raw material billet from a honeycomb body forming die to obtain a honeycomb-shaped formed product, the coupled forming raw material billet being formed by coupling a plurality of forming raw material billets each of which contains a ceramic raw material, and having a colorant applied on at least one of coupling surfaces between each forming raw material billets to be coupled; a cutting step of cutting the formed product to obtain a plurality of honeycomb formed bodies so that cut surfaces are formed perpendicularly to a direction in which the formed product is extruded from the honeycomb body forming die; and a separating step of separating the plurality of honeycomb formed bodies into a colorant-containing honeycomb formed bodies each having the cut surface on which the colorant appears, and a colorant non-containing honeycomb formed bodies each having no cut surface on which the colorant appears.
[2] A manufacturing method of a honeycomb structure, including the manufacturing method of the honeycomb formed body according to above-mentioned [1], wherein the manufacturing method of the honeycomb structure includes a step of firing only the colorant non-containing honeycomb formed body separated by the separating step, to obtain a honeycomb structure.
[3] The manufacturing method of the honeycomb formed body according to above-mentioned [1], wherein the cutting step is a step of cutting the formed product to obtain the plurality of honeycomb formed bodies in such a manner that each of the plurality of honeycomb formed bodies has a length of 83 to 360 mm.
[4] The manufacturing method of the honeycomb structure according to above-mentioned [2], wherein the cutting step is a step of cutting the formed product to obtain the plurality of honeycomb formed bodies in such a manner that each of the plurality of honeycomb formed bodies has a length of 83 to 360 mm.

According to the manufacturing method of honeycomb formed body of the present invention, it is possible to visualize a portion derived from the coupling surfaces of the forming raw material billets with the colorant. Consequently, according to the manufacturing method of honeycomb formed body of the present invention, the honeycomb formed body that does not include the portion derived from the coupling surfaces of the forming raw material billets can be easily and efficiently separated. In addition, according to the honeycomb structure of the present invention, since only the honeycomb formed body that does not include the portion derived from the coupling surfaces of the forming raw material billets are separated and fired, it is possible to obtain a large number of honeycomb structures from the predetermined amount of forming raw material while suppressing occurrence of defective products.

### BRIEF DESCRIPTION OF THE DRAWINGS

Fig. 1 is a schematic diagram of a forming raw material billet used for a manufacturing method of a honeycomb formed body of one embodiment of the present invention;
Fig. 2 is a schematic diagram of a coupled forming raw material billet used for a manufacturing method of a honeycomb formed body of one embodiment of the present invention;
Fig. 3 is a schematic explanatory view of a forming step in a manufacturing method of a honeycomb formed body of one embodiment of the present invention;
Fig. 4 is a schematic diagram of a formed product obtained by the forming step in a manufacturing method of a honeycomb formed body of one embodiment of the present invention;
Fig. 5 is a schematic diagram of a cross section A-A' in Fig. 4;
Fig. 6 is a schematic diagram of a cross section B-B' in Fig. 4;
Fig. 7 is a schematic diagram of a cross section C-C' in Fig. 4;
Fig. 8 is a schematic diagram of a cross section D-D' in Fig. 4;
Fig. 9 is a schematic diagram of a cross section E-E' in Fig. 4; and
Fig. 10 is a schematic diagram of a honeycomb structure obtained by a manufacturing method of a honeycomb structure of one embodiment of the present invention.

### DESCRIPTION OF THE PREFERRED EMBODIMENTS

Hereinafter, embodiments of the present invention will be described with reference to the drawings. The present invention is not limited to the following embodiments, and changes, modifications, and improvements can be added to the embodiments without departing from the gist of the present invention.

### 1. Manufacturing Method of Honeycomb Formed Body:

The manufacturing method of honeycomb formed body of one embodiment of the present invention includes a forming step, a cutting step, and a separating step. The forming step includes extruding a coupled forming raw material billet 19, which is formed by coupling a plurality of forming raw material billets 11 each containing a ceramic raw material, from a honeycomb body forming die 41 to obtain a honeycomb-shaped formed product 20. A colorant 15 is applied on at least one of coupling surfaces 13 between each forming raw material billets 11 to be coupled. The cutting step includes cutting the formed product 20 to obtain a plurality of honeycomb formed bodies 30 so that cut surfaces 21 are formed perpendicularly to a direction (hereinafter referred to as a "Z direction") in which the formed product 20 is extruded from the honeycomb body forming die 41. The separating step includes separating the plurality of honeycomb formed bodies 30 obtained by the cutting step into colorant-containing honeycomb formed bodies 35 and colorant non-containing honeycomb formed bodies 37. Here, the colorant-containing honeycomb formed bodies 35 are the honeycomb formed bodies 30 each having the cut surface 21 on which the colorant 15 appears. Meanwhile, the colorant non-containing honeycomb formed bodies 37 are the honeycomb formed bodies 30 each having no cut surface 21 on which the colorant 15 appears.

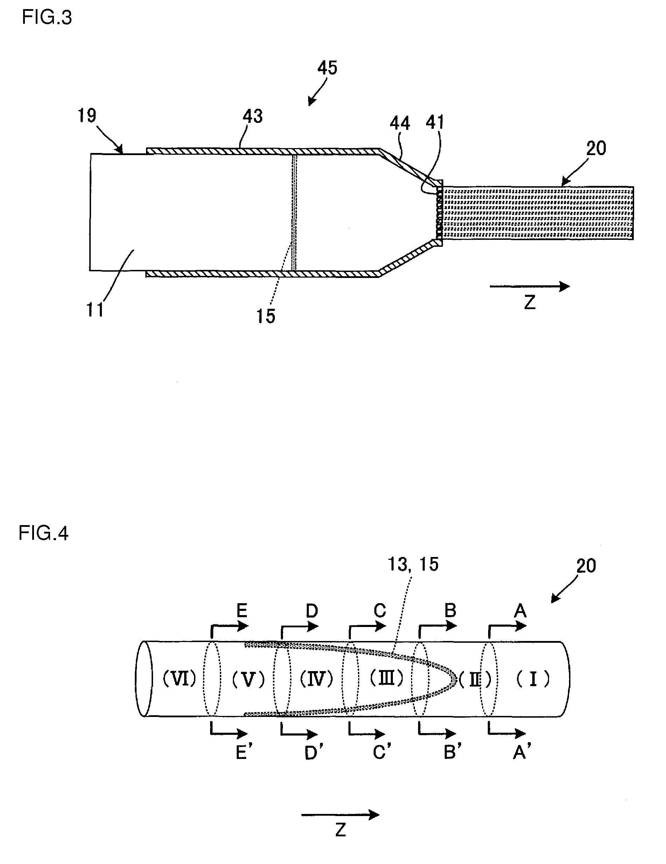

According to the manufacturing method of the honeycomb formed body of the embodiment, it is possible to visualize, by the colorant 15, a portion derived from the coupling surface 13 of the forming raw material billets 11. Consequently, according to the manufacturing method of the honeycomb formed body of the embodiment, by separating the above-described colorant non-containing honeycomb formed bodies 37, the honeycomb formed bodies 30 each of which does not include the portion derived from the coupling surface 13 of the forming raw material billets 11 can be easily and efficiently separated (see Fig. 4 to Fig. 9). In addition, according to the manufacturing method of the honeycomb formed body of the embodiment, the honeycomb formed bodies 30 (colorant-containing honeycomb formed bodies 35) each of which includes the portion derived from the coupling surface 13 of the forming raw material billets 11, that is, the honeycomb formed bodies 30 that are likely to be defective products can be easily and efficiently separated.

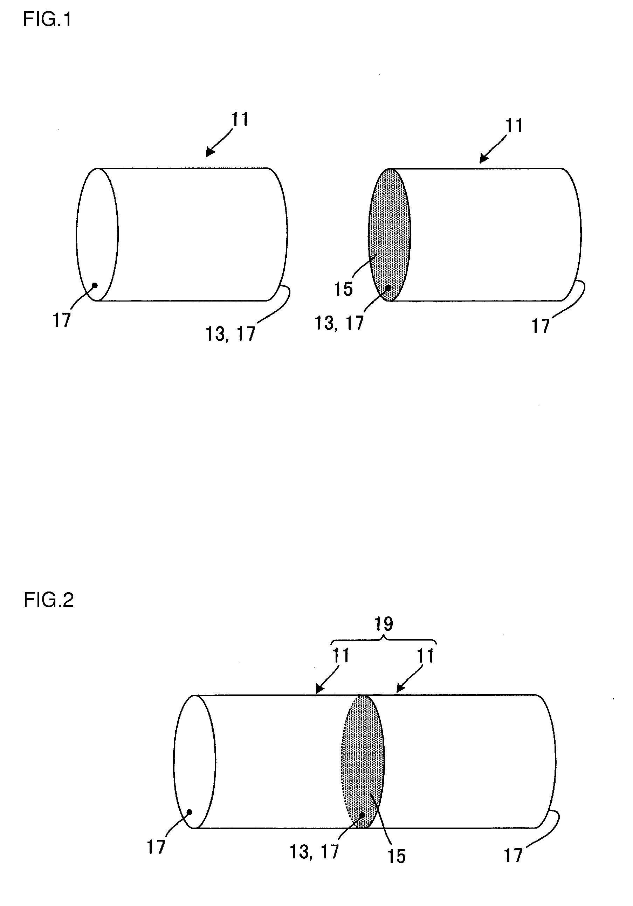

Fig. 1 is a schematic diagram of the forming raw material billet 11 used for the manufacturing method of the honeycomb formed body of the embodiment. Fig. 2 is a schematic diagram of the coupled forming raw material billet 19 used for the manufacturing method of the honeycomb formed body of the embodiment. The forming raw material billet 11 contains at least the ceramic raw material as described above. As the ceramic raw material, a cordierite raw material, cordierite, mullite, alumina, titania, silicon carbide (SiC), silicon-silicon carbide-based composite material, silicon nitride, aluminum titanate, and the like can be used. The ceramic raw material is preferably at least one kind selected from the group consisting of the cordierite raw material, the cordierite, the mullite, the alumina, the titania, the silicon carbide (SiC), the silicon-silicon carbide-based composite material, and the aluminum titanate. The "cordierite raw material" is a ceramic raw material such that materials are combined at a chemical composition within a range of silica of 42 to 56 mass %, alumina of 30 to 45 mass %, and magnesia of 12 to 16 mass %, and becomes the cordierite by firing. The "silicon-silicon carbide-based composite material" is formed using the silicon carbide (SiC) as aggregates and silicon (Si) as a bonding material.

As raw materials other than the ceramic raw material which can be contained in the forming raw material billet 11, a dispersing medium, an organic binder, an inorganic binder, a pore former, a surfactant, and the like can be used. A composition ratio of the respective raw materials in the forming raw material billet is not especially limited, and may be a composition ratio according to a structure, a material, and the like of a honeycomb structure body to be fabricated.

When obtaining the forming raw material billet 11, a kneaded material may be obtained by kneading the above-described various raw materials. There is not any special restriction on a method of forming the kneaded material, and an example of the method can be a method in which a kneader, a vacuum pugmill, and the like are used.

The forming step in the manufacturing method of the honeycomb formed body of the embodiment, the plurality of forming raw material billets 11 are coupled as described above to fabricate the coupled forming raw material billet 19. To fabricate the coupled forming raw material billet 19, for example, as shown in Fig. 1, the forming raw material billets 11 may be preliminary formed into a round pillar shape. Then, the colorant 15 is applied to end faces 17 of the round pillar-shaped forming raw material billets 11 by a method of application using, for example, a spray, an atomizer, and a brush. Next, the end faces 17 of the two forming raw material billets 11 may be press-bonded to obtain the coupled forming raw material billet 19. The end faces 17 of the forming raw material billets 11 press-bonded to one another become the coupling surfaces 13. Here, it is sufficient to apply the colorant 15 on at least one of a pair of the end faces 17 (a pair of the end faces 17 that become the coupling surfaces 13) of the two forming raw material billets 11 to be press-bonded.

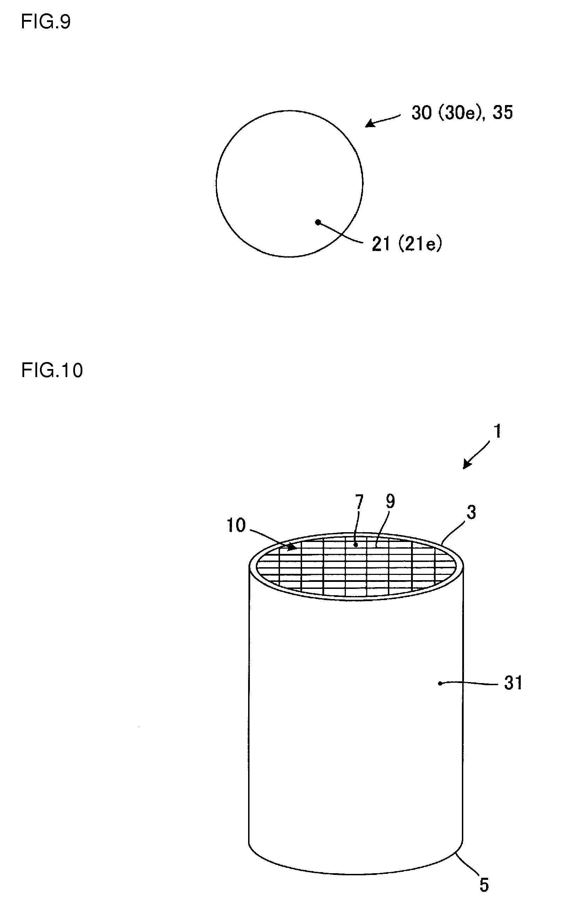

As the colorant 15 possibly used in the embodiment, a pigment and a dye, which are used for usual coloration, can be used. The colorant 15 may have a property of losing its color when firing the honeycomb formed body 30 at a high temperature or may have a property of leaving its color on a honeycomb structure 1 (see Fig. 10) after the firing. Further, the colorant 15 preferably contains a combustible component of 95 mass % or more. For example, as the colorant 15 possibly used in the embodiment, an azo dye, a cationic diazomethane-based dye, a thiazine-based dye, a triphenylmethane-based dye, and the like can be used. In order to easily apply the colorant 15 over the coupling surfaces 13 of the forming raw material billets 11, a kind of a solvent for dissolving the pigment or the dye and an amount of the solvent may be appropriately adjusted.

Fig. 3 is a schematic explanatory view of the forming step in the manufacturing method of the honeycomb formed body of the embodiment. As shown in the drawing, the forming step of the embodiment includes putting the coupled forming raw material billet 19 into an extruder 45, extrudes the coupled forming raw material billet 19 with the honeycomb body forming die 41 to obtain the honeycomb-shaped formed product 20. As the honeycomb body forming die 41, a die used for the conventional manufacturing method of a honeycomb formed body may be applied. As the honeycomb body forming die 41, the die with slits cut into a grid pattern may be used to obtain the honeycomb formed body with a desired cell shape, partition wall thickness, and cell density. As a material of the honeycomb body forming die 41, cemented carbide, which is less likely to wear, is preferable. The extruder 45 shown in Fig. 3 includes the honeycomb body forming die 41 at a frontal end of a cylinder 43. The cylinder 43 has a tapered portion 44 at the distal end portion. In the tapered portion 44, a bore of the cylinder 43 becomes smaller as approaching the honeycomb body forming die 41.

Fig. 4 is a schematic diagram of the formed product 20 obtained by the forming step in the manufacturing method of the honeycomb formed body of one embodiment of the present invention. Fig. 4 schematically shows an external outline of the formed product 20 and a distributed state of the colorant 15 in the formed product 20. The cutting step in the manufacturing method of the honeycomb formed body of the embodiment includes cutting the formed product 20 so that the cut surfaces 21 are formed perpendicularly to the Z direction. By cutting the formed product 20 forming the cut surfaces 21 perpendicular to the Z direction, the formed product 20 is separated along the Z direction, into the plurality of honeycomb formed bodies 30. Fig. 4 shows a situation of cutting the formed product 20 so as to form five cut surfaces 21a to 21e from the cross section A-A' to the cross section E-E'.

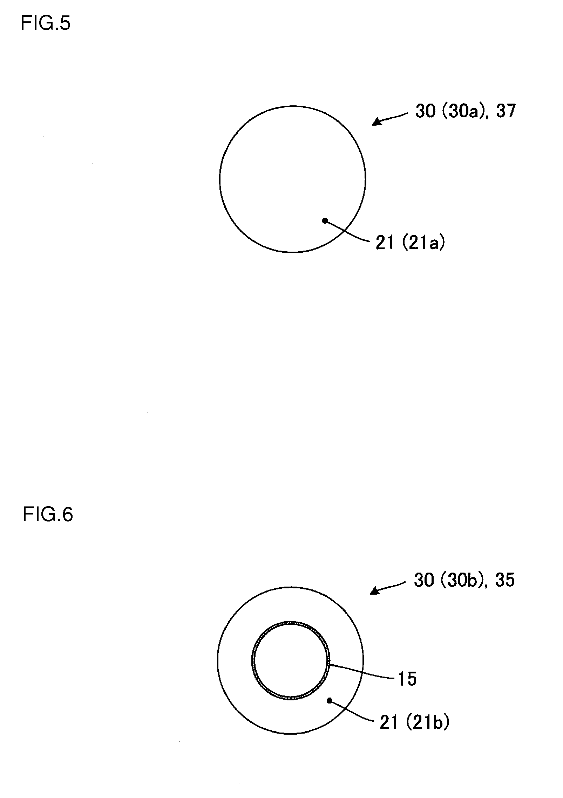

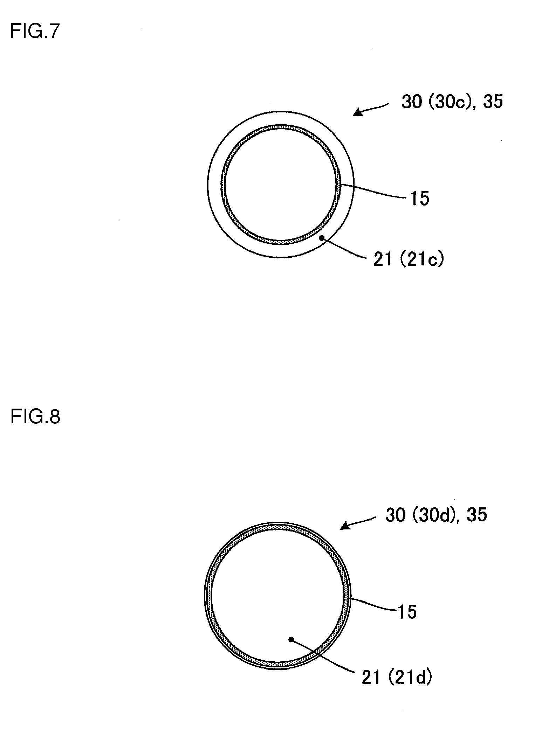

Fig. 5 to Fig. 9 are schematic diagrams of the cross section A-A' to the cross section E-E' in Fig. 4, respectively. Fig. 5 is the cut surface 21a of a honeycomb formed body 30a deprived from a region (I) of the formed product 20 in Fig. 4. Fig. 6 is the cut surface 21b of a honeycomb formed body 30b deprived from a region (II) of the formed product 20 in Fig. 4. Fig. 7 is the cut surface 21c of a honeycomb formed body 30c deprived from a region (III) of the formed product 20 in Fig. 4. Fig. 8 is the cut surface 21 d of a honeycomb formed body 30d deprived from a region (IV) of the formed product 20 in Fig. 4. Fig. 9 is the cut surface 21e of a honeycomb formed body 30e deprived from a region (V) of the formed product 20 in Fig. 4. Among the cut surfaces 21a to 21e, at the cut surface 21b, the cut surface 21c, and the cut surface 21d, the colorant 15 appears in a ring shape. The size of the ring of the colorant 15 becomes larger in the order of the cut surface 21b, which is on the front side in the Z direction, to the cut surface 21c and the cut surface 21d, which are on the rear side. In the extruder 45 shown in Fig. 3, the bore of the cylinder 43 at the tapered portion 44, which is at the distal end portion of the cylinder 43, becomes smaller as approaching the honeycomb body forming die 41. Due to such tapered shape of the cylinder 43, a speed of the forming raw material (kneaded material) passing through a center part of the tapered portion 44 is faster than a speed of the forming raw material (kneaded material) passing through an outer periphery portion of the tapered portion 44. Accordingly, as shown in Fig. 2, even if the coupling surfaces 13 of the coupled forming raw material billet 19 before the extrusion is perpendicular to the Z direction, as shown in Fig. 4, the coupling surface 13 in the formed product 20 significantly is curved projecting a center part of the coupling surface 13 in the Z direction.

Assume that the formed product 20 shown in Fig. 4 is cut off along the cut surfaces 21 a to 21e (the cross section A-A' to the cross section E-E') to obtain the honeycomb formed bodies 30 derived from the respective region (I) to region (VI) of the formed product 20, respectively. In this case, in the separating step of the embodiment, the honeycomb formed bodies 30 derived from the region (I) and the region (VI) are separated as the colorant non-containing honeycomb formed bodies 37. Additionally, the honeycomb formed bodies 30 (honeycomb formed bodies 30b to 30e) derived from the region (II) to the region (V) are separated as the colorant-containing honeycomb formed bodies 35. Since the colorant non-containing honeycomb formed bodies 37 do not include the portion derived from the coupling surface 13, a defect due to the coupling surface 13 does not occur. A pinhole at a partition wall, a deformation of a cell shape, and the like may be examples of the defects due to the coupling surface 13.

### 2. Manufacturing Method of Honeycomb Structure:

The manufacturing method of honeycomb structure of the embodiment includes the above-described manufacturing method of honeycomb formed body (manufacturing method of honeycomb formed body of the present invention), and further includes firing only the colorant non-containing honeycomb formed bodies 37 separated by the separating step, to obtain the honeycomb structure 1 (see Fig. 10).

Before firing (main firing) the honeycomb formed body 30, calcinating the honeycomb formed body 30 is preferable. The calcination is performed for degreasing, and the method is not especially limited as long as organic matters (the organic binder, the dispersing agent, the pore former, and the like) in the honeycomb formed body 30 can be removed. Generally, since a combustion temperature of the organic binder is approximately 100 to 300°C and a combustion temperature of the pore former is approximately 200 to 800°C, as conditions for the calcination, the honeycomb formed body 30 is preferably heated at approximately 200 to 1000°C for 3 to 100 hours in oxidation atmosphere.

The honeycomb formed body 30 is fired (main firing) in order to sinter the forming raw material which constitutes the calcinated honeycomb formed body 30, to be densified and ensure predetermined strength. Since the firing conditions (temperature, time, and atmosphere) differ depending on the kind of the forming raw material, appropriate conditions may be selected according to the kind. For example, in the case of using the cordierite raw material, the firing temperature is preferable to be 1410 to 1440°C. In the case of using the cordierite raw material, the firing time is preferable to be four to six hours as keeping time of the maximum temperature.

Fig. 10 is a schematic diagram of the honeycomb structure 1 obtained by the manufacturing method of the honeycomb structure of the embodiment. The honeycomb structure 1 has a honeycomb structure body 10. The honeycomb structure body 10 has a partition wall 9 that defines a plurality of cells 7 which become channels for a fluid and extend from a first end face 3 being one end face of the honeycomb structure body 10 to a second end face 5 being the other end face of the honeycomb structure body 10. A circumferential wall 31 which surrounds an outer circumference of the honeycomb structure body 10 may be provided, as provided in the honeycomb structure 1.

### (Examples)

The following describes the present invention further in detail based on examples. The present invention is not limited to these examples.

### (Example 1)

First, using the forming raw material containing the ceramic raw material, a kneaded material to form the honeycomb formed body was prepared. As the ceramic raw material, the cordierite raw material was used. As the cordierite raw material, talc, kaolin, alumina, and silica were compounded to realize a composition of MgO of 13.5 mass %, Al₂O₃ of 36.0 mass %, and SiO₂ of 50.5 mass %. A dispersing medium, an organic binder, a dispersing agent, and a pore former were added to the cordierite raw material to prepare a kneaded material for forming. An amount of added dispersing medium was 3 parts by mass with respect to 100 parts by mass of the cordierite raw material. An amount of added organic binder was 5 parts by mass with respect to 100 parts by mass of the cordierite raw material. An amount of added pore former was 10 parts by mass with respect to 100 parts by mass of the cordierite raw material. The obtained ceramic-formed raw material was kneaded with a kneader to obtain a plurality of kneaded materials (forming raw material billets). The kneaded material (forming raw material billet) had a round pillar shape with a length of 1250 mm, and a diameter of the end face of 300 mm (see Table 1).

Aizen methylene blue FZ (Hodogaya Chemical Co., Ltd.) was applied as a colorant over one end face of each of the plurality of kneaded materials (forming raw material billets). The kneaded materials (forming raw material billets) were put into an extruder. When the kneaded material (forming raw material billet) is put into the extruder, the kneaded material (forming raw material billet) was arranged such that a longitudinal direction of the kneaded material (forming raw material billet) was aligned to the Z direction (extrusion direction) and the end face on which the colorant was applied faces toward the front side in the Z direction (extrusion direction), that is, the side close to the honeycomb body forming die. Furthermore, the end face on the rear side of the kneaded material (the forming raw material billet) put into the extruder, that is, the end face on which the colorant was not applied, was press-bonded to the end face of another kneaded material (forming raw material billet) on which the colorant was applied. Thus, the coupled forming raw material billets were sequentially formed in the extruder. Then, the coupled forming raw material billets were extruded by using the extruder, to obtain a round pillar-shaped honeycomb-shaped formed product.

The formed product had a length in the Z direction of 2880 mm, a cross section perpendicular to the Z direction having a round shape with a diameter of 281 mm, a thickness of the partition wall of 304.8 µm, and a cell density of 46.5 pieces/cm² (see Table 1).

Subsequently, the formed product was cut by every 360 mm along the Z direction, to obtain eight honeycomb formed bodies (see Table 1). Both end faces of the respective eight honeycomb formed bodies were visually checked to separate the eight honeycomb formed bodies into the honeycomb formed bodies in each of which the colorant appeared on at least one of the end faces, as the colorant-containing honeycomb formed bodies, and the honeycomb formed bodies in each of which the colorant did not appear on any of the end faces, as the colorant non-containing honeycomb formed bodies. Among the eight honeycomb formed bodies, the colorant-containing honeycomb formed bodies were two pieces while the colorant non-containing honeycomb formed bodies were six pieces.

Furthermore, the two pieces of the colorant-containing honeycomb formed bodies were determined as "presumed defective products", and the six pieces of the colorant non-containing honeycomb formed bodies were determined as "presumed non-defective products" (see Table 1).

After performing high-frequency dielectric heating drying on the honeycomb formed body, the honeycomb formed body was dried at 120°C for two hours with a hot wind dryer. Afterwards, the honeycomb formed body was fired at 1350 to 1450°C for ten hours to obtain a honeycomb structure.

### (Comparative Examples 1 and 2)

Eight pieces of the honeycomb formed body were obtained in the same way as Example 1, except that the colorant was not applied over the end face of the kneaded material (forming raw material billet). According to a rule of thumb, the obtained honeycomb formed bodies were separated into the "presumed defective products" and the "presumed non-defective products". In Comparative Example 2, since the "presumed defective products" were overestimated, the "presumed defective products" were three pieces while the "presumed non-defective products" were five pieces. In Comparative Example 3, since the "presumed defective products" were underestimated, the "presumed defective product" was one piece while the "presumed non-defective products" were seven pieces. Subsequently, in the same way as Example 1, the drying and firing were performed to obtain the honeycomb structures.

### (Example 2)

The honeycomb formed bodies were fabricated in the same way as Example 1, except that the respective conditions were changed to the specifications as shown in Table 1. Then, after separating the honeycomb formed bodies into the "presumed defective products" and the "presumed non-defective products", the honeycomb structure was fabricated.

### (Comparative Example 3)

The honeycomb formed bodies were fabricated in the same way as Comparative Example 1, except that the respective conditions were changed to the specifications as shown in Table 1. Then, after separating the honeycomb formed bodies into the "presumed defective products" and the "presumed non-defective products", the honeycomb structure was fabricated.

### (Comparative Example 4)

The honeycomb formed bodies were fabricated in the same way as Comparative Example 2, except that the respective conditions were changed to the specifications as shown in Table 1. Then, after separating the honeycomb formed bodies into the "presumed defective products" and the "presumed non-defective products", the honeycomb structure was fabricated.

The obtained honeycomb structures were inspected for pinholes and cell shape, to determine whether the honeycomb structure was a defective product or a non-defective product. Here, the inspection for pinholes is an inspection in which smoke is caused to flow from the one end face of the honeycomb structure into the cells and the presence/absence of the pinholes on the partition wall is determined based on a distribution state of the smoke flown out from the opposite end face. The number of non-defective products and the number of defective products obtained from the honeycomb formed bodies of the "presumed defective products" and the number of non-defective products and the number of defective products obtained from the honeycomb formed bodies of the "presumed non-defective products" were evaluated. The results are shown in Table 2.

**[Table 1]**

| | Forming raw material billet | | | | Formed product | | | | | Honeycomb formed body | | | |
|---|---|---|---|---|---|---|---|---|---|---|---|---|---|
| | Shape | Length (mm) | Diameter (mm) | Application of colorant | Shape | Length (mm) | Diameter (mm) | Thickness of partition wall (µm) | Cell density (piece/cm²) | Length (mm) | Number of pieces | Presumed non-defective product (piece) | Presumed defective product (piece) |
| Example 1 | Round pillar | 1250 | 300 | Applied | Round pillar | 2880 | 281 | 304.8 | 46.5 | 360 | 8 | 6 | 2 |
| Comparative example 1 | Round pillar | 1250 | 300 | Not-applied | Round pillar | 2880 | 281 | 304.8 | 46.5 | 360 | 8 | 5 | 3 |
| Comparative example 2 | Round pillar | 1250 | 300 | Not-applied | Round pillar | 2880 | 281 | 304.8 | 46.5 | 360 | 8 | 7 | 1 |
| Example 2 | Round pillar | 1250 | 300 | Applied | Round pillar | 18260 | 86 | 101.6 | 93.0 | 83 | 220 | 200 | 20 |
| Comparative example 3 | Round pillar | 1250 | 300 | Not-applied | Round pillar | 18260 | 86 | 101.6 | 93.0 | 83 | 220 | 198 | 22 |
| Comparative example 4 | Round pillar | 1250 | 300 | Not-applied | Round pillar | 18260 | 86 | 101.6 | 93.0 | 83 | 220 | 202 | 18 |

**[Table 2]**

| | Presumed non-defective product | | Presumed defective product | |
|---|---|---|---|---|
| | Non-defective product (piece) | Defective product (piece) | Non-defective product (piece) | Defective product (piece) |
| Example 1 | 6 | 0 | 0 | 2 |
| Comparative example 1 | 5 | 0 | 1 | 2 |
| Comparative example 2 | 6 | 1 | 0 | 1 |
| Example 2 | 200 | 0 | 0 | 20 |
| Comparative example 3 | 198 | 0 | 2 | 20 |
| Comparative example 4 | 200 | 2 | 0 | 18 |

### [Examination]

In Examples 1 and 2, all the "presumed defective products" were actually evaluated as the defective products while all the "presumed non-defective products" were actually evaluated as the non-defective products. Since Comparative Examples 1 and 3 overestimated the "presumed defective products", the "presumed non-defective products" did not include the defective products actually; however, the "presumed defective products" included the non-defective products actually. That is, Comparative Examples 1 and 3 resulted in disposing of a honeycomb formed body to be obtained originally as the non-defective products. Since Comparative Examples 2 and 4 underestimated the "presumed defective products", the "presumed non-defective products" included the defective products actually. Accordingly, Comparative Examples 2 and 4 resulted in vainly firing the honeycomb formed body to be dealt originally as the defective products.

The present invention is applicable to fabrication of a honeycomb structure used as a filter or a catalyst carrier for purifying exhaust gas.

### Description of Reference Numerals

1: honeycomb structure, 3: first end face, 5: second end face, 7: cell, 9: partition wall, 10: honeycomb structure body, 11: forming raw material billet, 13: coupling surface (of forming raw material billet), 15: colorant, 17: end face (of forming raw material billet), 19: coupled forming raw material billet, 20: formed product, 21: cut surface, 21a to 21e: cut surface, 30: honeycomb formed body, 30a to 30e: honeycomb formed body, 31: circumferential wall, 35: colorant-containing honeycomb formed body, 37: colorant non-containing honeycomb formed body, 41: honeycomb body forming die, 43: cylinder, 44: tapered portion, 45: extruder.

## Claims

1. A manufacturing method of a honeycomb formed body, comprising:
a forming step of extruding a coupled forming raw material billet from a honeycomb body forming die to obtain a honeycomb-shaped formed product, the coupled forming raw material billet being formed by coupling a plurality of forming raw material billets each of which contains a ceramic raw material, and having a colorant applied on at least one of coupling surfaces between each forming raw material billets to be coupled;
a cutting step of cutting the formed product to obtain a plurality of honeycomb formed bodies so that cut surfaces are formed perpendicularly to a direction in which the formed product is extruded from the honeycomb body forming die; and
a separating step of separating the plurality of honeycomb formed bodies into a colorant-containing honeycomb formed bodies each having the cut surface on which the colorant appears, and a colorant non-containing honeycomb formed bodies each having no cut surface on which the colorant appears.

2. A manufacturing method of a honeycomb structure, comprising the manufacturing method of the honeycomb formed body according to claim 1,
wherein the manufacturing method of the honeycomb structure includes a step of firing only the colorant non-containing honeycomb formed body separated by the separating step, to obtain a honeycomb structure.

3. The manufacturing method of the honeycomb formed body according to claim 1, wherein the cutting step is a step of cutting the formed product to obtain the plurality of honeycomb formed bodies in such a manner that each of the plurality of honeycomb formed bodies has a length of 83 to 360 mm.

4. The manufacturing method of the honeycomb structure according to claim 2, wherein the cutting step is a step of cutting the formed product to obtain the plurality of honeycomb formed bodies in such a manner that each of the plurality of honeycomb formed bodies has a length of 83 to 360 mm.
